# FASCICULE DE BREVET EUROPEEN

(11) **EP 0 576 306 B1**
(45) Date de publication et mention de la délivrance du brevet: **01.04.1998**
(21) Numéro de dépôt: 93400133.0
(22) Date de dépôt: 20.01.1993
(51) Int. Cl.: G01N 15/06, F16N 29/00

(54) **Détecteur magnétique**
Magnetischer Detektor
Magnetic detector

(30) Priorité: 27.01.1992 FR 9200812
(43) Date de publication de la demande: 29.12.1993
(73) Titulaire: IN-HR, 28200 Chateaudun (FR)
(72) Inventeur: Mayeur, Jean-Pierre, F-78450 Villepreux (FR)
(74) Mandataire: Dawidowicz, Armand

(56) Documents cités:
- EP-A- 0 290 397
- FR-A- 2 564 897
- FR-A- 2 641 087
- GB-A- 2 029 580
- GB-A- 2 042 182
- GB-A- 2 219 405
- US-A- 4 008 464

## Description

L'invention concerne un détecteur magnétique du type destiné à être disposé dans le passage d'un flux de fluide pour capter les particules métalliques transportées dans ledit flux et déclencher une alarme après captation d'une quantité prédéterminée de particules métalliques, du type comprenant un aimant entouré par deux masses polaires séparées par un entrefer axial.

De tels détecteurs sont utilisés en particulier pour détecter la détérioration d'organes d'usure, par exemple des moteurs tels que des réacteurs, et/ou des incidents de fonctionnement, produisant la séparation de particules métalliques qui sont véhiculées dans un flux de fluide tel qu'un flux d'huile ou de réfrigérant. Ces particules métalliques doivent être captées par l'aimant du détecteur, lequel peut déclencher une alarme pour une quantité prédéterminée de particules. Les particules captées sont des particules aimantables, soit parce qu'issues d'une pièce en un métal magnétique, soit parce que provenant d'une pièce en un matériau non magnétique mais solidaire d'un matériau magnétique. La détection des particules permet la maintenance préventive des organes mécaniques par un contrôle permanent de leur dégradation.

Pour avoir une efficacité élevée, de tels détecteurs doivent attirer une proportion très forte des particules passant à leur voisinage, même lorsque le flux de fluide est à vitesse élevée et quand ledit fluide a tendance à retenir les particules, par exemple dans le cas d'un fluide visqueux comme une huile.

En outre, les particules captées doivent être concentrées sur l'entrefer pour produire éventuellement une alarme, le comblement de l'entrefer fermant un circuit électrique d'alarme.

Bien entendu, ces phénomènes de captation différent avec la nature des particules, leurs dimensions, la nature du fluide porteur et sa vitesse d'écoulement.

Les capteurs connus du type indiqué à l'introduction sont constitués d'un aimant entouré à chacune de ses deux extrémités par une masse polaire.

L'aimant est en un alliage classique Al-Ni-Co.

Les utilisateurs de ces détecteurs connus ont constaté de nombreux inconvénients et insuffisances. En particulier, l'efficacité de captation des particules, c'est-à-dire le rapport du nombre de particules captées au nombre de particules injectées au cours d'un essai (en %) est faible, même pour de grosses particules (1000 µm).

En outre, les aimants utilisés sont sujets à un vieillissement accéléré du fait des températures élevées (de l'ordre de 175°C par exemple pour une huile moteur), le vieillissement étant par ailleurs permanent. De plus, ces aimants peuvent être démagnétisés à distance, par exemple pour recueillir par un aimant les particules captées.

De plus, dans le cas de l'utilisation du détecteur pour le déclenchement d'une alarme par fermeture d'un circuit électrique par des particules captées recouvrant l'entrefer, on a constaté que les particules n'ont pas tendance à s'accumuler dans l'entrefer, de sorte qu'un nombre total très élevé de particules captées est nécessaire pour déclencher l'alarme.

La présente invention vise à pallier ces inconvénients des détecteurs magnétiques connus.

A cet effet, le détecteur selon l'invention décrit par la revendication 1 est caractérisé en ce que sa surface externe a, au moins au voisinage de l'entrefer, une surface périphérique convergeant vers ledit entrefer. Les essais effectués ont démontré qu'une telle forme convergente augmentait le gradient du champ magnétique autour de l'entrefer, ce qui accroît l'efficacité de captation et favorise la retenue des particules captées. En outre, dans le cas d'un détecteur électrique, cette forme favorise l'accumulation des particules sur l'entrefer ou au moins à son voisinage.

Selon une première forme de réalisation, les masses polaires sont en un matériau faiblement magnétique et comportent lesdites surfaces externes convergentes du détecteur.

Selon une variante, les masses polaires sont en un matériau magnétique et sont enrobées chacune dans une fourrure en matériau faiblement magnétique comportant respectivement ladite surface externe convergente du détecteur.

Selon une autre variante, le détecteur comprend deux aimants montés en opposition et séparés par une masse magnétique, les extrémités opposées de chacun des aimants étant munies d'une masse polaire en matériau magnétique, une fourrure en matériau faiblement magnétique comportant ladite surface externe entourant chacun desdits aimants et la masse polaire associée.

Ces trois variantes de l'invention permettent, pour des coûts croissants, des efficacités de captation également croissantes, de sorte qu'elles seront utilisées chacune en fonction de l'efficacité de captation voulue. En particulier dans le cas d'un détecteur électrique, une efficacité de captation trop élevée peut amener au déclenchement d'alarmes jugées intempestives ou prématurées, de sorte que, en fonction de la destination du détecteur et d'un seuil d'alarme prédéterminé, on choisira l'un ou l'autre des types de détecteurs précédents, en adaptant bien entendu les variables telles que l'entrefer, la forme exacte des surfaces convergentes et les dimensions des composants, en particulier des masses polaires.

En particulier, dans le cas de la dernière variante, on peut prévoir que l'épaisseur de la masse magnétique séparant les deux aimants est double de celle des masses polaires qui sont de même épaisseur. On obtient ainsi une concentration optimale des particules dans la partie médiane de l'entrefer.

Le détecteur selon l'invention peut être appliqué à un contrôle visuel ou électrique, le détecteur étant associé ou non, de manière classique, à un auto-obturateur.

Selon une forme de réalisation préférée de l'invention, le ou les aimants sont des aimants au samarium-cobalt. On évite ainsi les risques de démagnétisation à distance et on réduit considérablement le vieillissement à température élevée.

De préférence, l'aimant ou les aimants et les masses polaires sont montés sur un noyau en matériau non magnétique.

L'invention sera bien comprise à la lecture de la description suivante faite en se référant au dessin annexé dans lequel :
La figure 1 est une vue schématique en plan, partiellement en coupe, d'un détecteur selon un premier exemple de réalisation de l'invention;
la figure 2 est analogue à la figure 1, pour une variante;
la figure 3 est analogue aux figures 1 et 2, pour une seconde variante;
et la figure 4 est une vue schématique en coupe d'un carter destiné à être intercalé dans une canalisation et comportant un détecteur selon la figure 3 équipé pour la détection électrique.

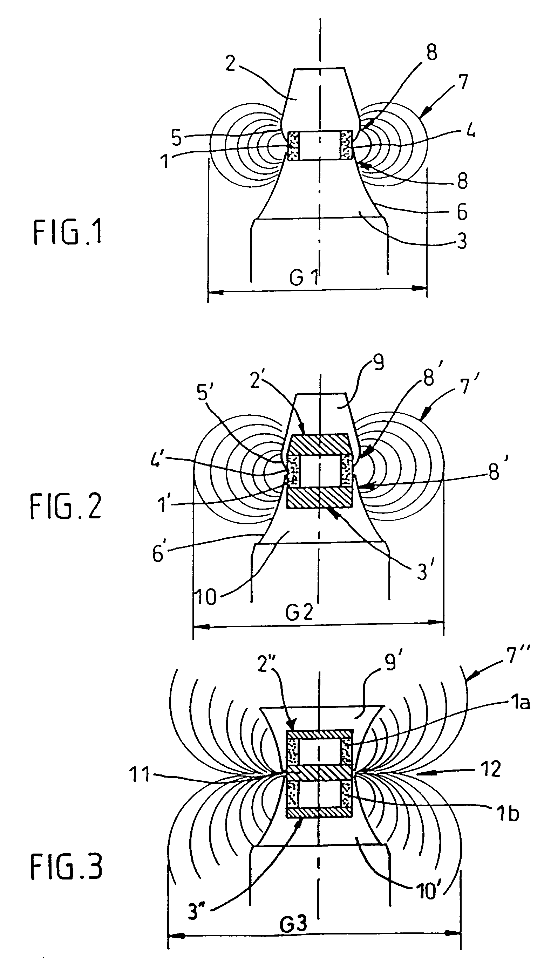

Le détecteur magnétique représenté schématiquement à la figure 1 comprend un aimant annulaire 1 avantageusement au samarium-cobalt. L'aimant 1 est partiellement recouvert par deux masses polaires axiales 2 et 3 en matériau faiblement magnétique, par exemple un acier faiblement magnétique, laissant entre elles un entrefer 4. Les masses polaires 2 et 3 ont des surfaces externes 5 et 6 respectivement adjacentes à l'entrefer 4 qui convergent vers cet entrefer 4 avec, dans l'exemple représenté, une section courbe.

L'ensemble crée un gradient d'induction 7 d'un diamètre G1, le déplacement ou la migration des particules captées étant limité aux lignes 8 correspondant aux extrémités axiales de l'aimant 1.

Dans la forme de réalisation de la figure 2, les masses polaires 2' et 3' sont en matériau magnétique et l'ensemble est enrobé dans deux fourrures en matériau faiblement magnétique 9 et 10 respectivement laissant entre elles l'entrefer 4' et comportant les surfaces externes convergentes 5' et 6'. Le champ du gradient d'induction 7' a un diamètre G2 supérieur à G1 et la migration des particules est limitée par les lignes 8' encore déterminée par les extrémités axiales de l'aimant 1'.

Dans la variante de la figure 3, le détecteur comprend deux aimants annulaires 1a et 1b de même longueur, qui sont séparés par une bague en matériau magnétique 11, par exemple en acier. Les masses polaires 2'' et 3'' sont dans le même matériau magnétique et ont la même épaisseur qui est la moitié de celle de la bague 11. L'ensemble, comme à la figure 2, est partiellement enrobé de fourrures 9' et 10' en matériau faiblement magnétique, comme de l'acier inoxydable faiblement magnétique, qui laissent entre elles un entrefer et comportent les surfaces externes convergentes du détecteur.

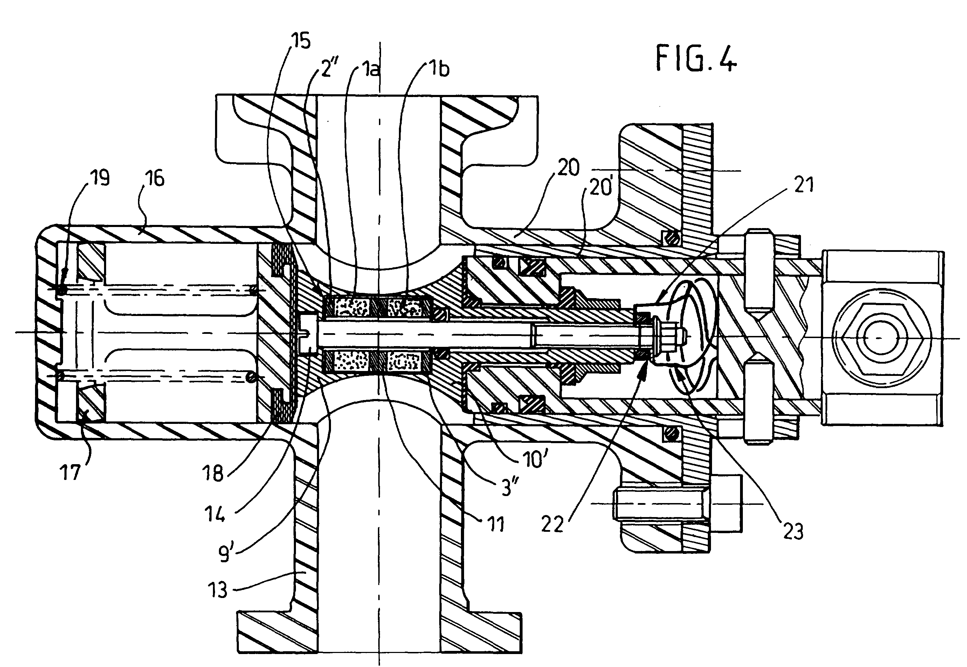

Dans cette configuration, les gradients d'induction et 7" et 7"' ont un diamètre G3 supérieur à G2 et G1 et, en outre, la migration des particules est concentrée sur l'entrefer du fait que les lignes et 7" et 7"' se rencontrent sur l'axe 12 de la bague 11. Cette configuration se prête donc naturellement bien à la réalisation d'un détecteur électrique, tel que celui représenté à titre d'exemple à la figure 4.

Le détecteur est disposé dans un carter 13 destiné à être intercalé dans une canalisation (non représentée) de telle sorte que le fluide s'écoulant dans la canalisation passe autour du détecteur. Les composants du détecteur, à savoir les aimants 1a, 1b, la bague 11, les masses polaires 2'' et 3'' et les fourrures 9', 10' sont montés sur un noyau 14 en matériau amagnétique assurant une bonne fermeture des champs et sont enfermés dans une enveloppe 15 en matière synthétique pour la protection vis à vis de l'environnement et l'isolation électrique.

Le carter 13 comporte une saillie latérale borgne 16 dans laquelle est logé un piston 17 en appui sur le détecteur par l'intermédiaire d'un joint d'étanchéité 18 et soumis à l'action d'un ressort 19. La saillie 16 est prolongée, de l'autre côté du carter 13, par un manchon 20 fermé par un obturateur 20'. Cet ensemble constitue un auto-obturateur permettant l'extraction du détecteur sans fuite du circuit de fluide.

Le détecteur est raccordé à des bornes électriques 21 et 22 d'un circuit de détection 23 alimentant une alarme ou tout autre dispositif d'affichage ou de signalisation, le circuit 23 étant fermé par les particules captées que porte l'entrefer entre les bords voisins des fourrures 9' et 10'.

Ces bords ne sont pas obligatoirement délimités par des surfaces planes parallèles. Afin d'accroître le maintien des particules captées, on peut envisager de donner à ces bords des formes variées, par exemple plans non parallèles, surfaces courbes ou brisées, etc... créant un effet de piège pour les particules captées.

En outre, on peut prévoir qu'une des fourrures 9' et 10' soit coulissante sur le noyau 14 afin de régler l'entrefer en fonction du taux de captation voulu.

Enfin, dans le cas d'un détecteur non électrique, il est possible de disposer entre les bords des fourrures une bague amagnétique isolant les fourrures l'une de l'autre et assurant en outre une protection du ou des aimants et pouvant former une surface collectrice des particules captées.

## Revendications

1. Détecteur magnétique électrique du type destiné à être disposé dans le passage d'un flux de fluide pour capter les particules métalliques transportées dans ledit flux et déclencher une alarme après captation d'une quantité prédéterminée de particules métalliques, du type comprenant un aimant, deux masses polaires étant disposées de part et d'autre dudit aimant et séparées par un entrefer axial,
caractérisé en ce que la surface externe dudit détecteur a, au moins au voisinage de l'entrefer (4, 4'), une surface périphérique (5, 6; 5', 6') convergeant vers ledit entrefer.

2. Détecteur selon la revendication 1,
caractérisé en ce que les masses polaires (2, 3) sont en un matériau faiblement magnétique et comportent lesdites surfaces externe convergentes (5, 6) du détecteur.

3. Détecteur selon la revendication 1,
caractérisé en ce que les masses polaires (2', 3') sont en un matériau magnétique et sont enrobées chacune dans une fourrure (9, 10) en matériau faiblement magnétique comportant respectivement ladite surface externe convergente (5', 6') du détecteur.

4. Détecteur selon la revendication 1,
caractérisé en ce que le détecteur comprend deux aimants (la, 1b) montés en opposition et séparés par une masse magnétique (11), les extrémités opposées de chacun des aimants (1a, 1b) étant munies d'une masse polaire (2", 3") en matériau magnétique, une fourrure (9', 10') en matériau faiblement magnétique comportant ladite surface externe entourant chacun desdits aimants (1a, 1b) et la masse polaire (2", 3") associée.

5. Détecteur selon la revendication 4,
caractérisé en ce que l'épaisseur de la masse magnétique (11) séparant les deux aimants (la, 1b) est double de celle des masses polaires (2", 3") qui sont de même épaisseur.

6. Détecteur selon l'une des revendications 1 à 5,
caractérisé en ce que le ou les aimants (1; 1'; 1a, 1b) sont des aimants au samarium-cobalt.

7. Détecteur selon l'une des revendications 1 à 6,
caractérisé en ce qu'il est protégé par une enveloppe (15) en matière synthétique.

8. Détecteur selon l'une des revendications 1 à 7,
caractérisé en ce qu'il est connecté aux bornes (21, 22) d'un circuit électrique (23) de détection alimentant un dispositif d'alarme et/ou d'affichage et/ou de signalisation.

9. Détecteur selon l'une des revendications 1 à 8,
caractérisé en ce que le ou les aimants (1; 1'; 1a, 1b) et les masses polaires (2, 3; 2', 3'; 2", 3") sont montés sur un noyau (14) en matériau amagnétique.

10. Détecteur selon l'une des revendications 1 à 9,
caractérisé en ce que les faces en regard desdites surfaces périphériques convergentes (5, 6; 5', 6') qui délimitent l'entrefer, sont délimitées par des plans parallèles.

11. Détecteur selon l'une des revendications 1 à 9,
caractérisé en ce que les faces en regard desdites surfaces périphériques convergentes (5, 6; 5', 6') qui délimitent l'entrefer, sont délimitées par des surfaces non planes ou des plans non parallèles.

12. Détecteur selon l'une des revendications 1 à 11,
caractérisé en ce qu'une des surfaces périphériques convergentes (5, 6; 5', 6') est portée par une pièce (2, 3; 9, 10; 9', 10') réglable en position axiale.

13. Détecteur selon la revendication 1,
caractérisé en ce que l'entrefer (4, 4') est entouré par une bague en matériau amagnétique.

## Patentansprüche

1. Magnetischer, elektrischer Detektor, der dafür vorgesehen ist, im Durchgang einer Fluidströmung angeordnet zu werden, um die metallischen Partikel, die in der Strömung transportiert werden, aufzunehmen und nach Aufnahme einer vorbestimmten Menge metallischer Partikel einen Alarm auszulösen, mit einem Magneten, wobei zwei Polmassen beiderseits des Magneten angeordnet und durch einen axialen Luftspalt getrennt sind,
**dadurch gekennzeichnet**, daß die Außenfläche des Detektors wenigstens im Bereich des Luftspaltes (4, 4') eine Umfangsfläche (5, 6; 5', 6') aufweist, die zu dem Luftspalt hin konvergiert.

2. Detektor nach Anspruch 1,
**dadurch gekennzeichnet**, daß die Polmassen (2, 3) aus einem schwach magnetischen Material bestehen und die konvergierenden Außenflächen (5, 6) des Detektors aufweisen.

3. Detektor nach Anspruch 1,
**dadurch gekennzeichnet**, daß die Polmassen (2', 3') aus einem magnetischen Material bestehen und jeweils in einer Ummantelung (9, 10) aus einem schwach magnetischen Material aufgenommen sind, die jeweils die konvergierende Außenfläche (5', 6') des Detektors aufweist.

4. Detektor nach Anspruch 1,
**dadurch gekennzeichnet**, daß der Detektor zwei Magneten (1a, 1b) aufweist, die gegenüberliegend angeordnet und durch eine magnetische Masse (11) getrennt sind, wobei die gegenüberliegenden Enden jedes der Magneten (la, 1b) mit einer Polmasse (2", 3") aus einem magnetischen Material versehen sind, wobei eine Ummantelung (9', 10') aus einem schwach magnetischen Material, die die Außenfläche aufweist, jeden der Magneten (1a, 1b) und die damit verbundende Polmasse (2", 3") umgibt.

5. Detektor nach Anspruch 4,
**dadurch gekennzeichnet**, daß die Dicke der magnetischen Masse (11), die die zwei Magneten (1a, 1b) trennt, doppelt so groß ist wie die Dicke der Polmassen (2", 3"), die jeweils dieselbe Dicke aufweisen.

6. Detektor nach einem der Ansprüche 1 bis 5,
**dadurch gekennzeichnet**, daß der Magnet oder die Magneten (1; 1'; 1a, 1b) Magneten aus Samariumkobalt sind.

7. Detektor nach einem der Ansprüche 1 bis 6,
**dadurch gekennzeichnet**, daß er durch eine Umhüllung (15) aus Kunststoff geschützt ist.

8. Detektor nach einem der Ansprüche 1 bis 7,
**dadurch gekennzeichnet**, daß er mit Anschlüssen (21, 22) eines elektrischen Kreises (23) zur Detektion verbunden ist, der eine Alarm- und/oder Anzeige- und/oder Signalgebungsvorrichtung speist.

9. Detektor nach einem der Ansprüche 1 bis 8,
**dadurch gekennzeichnet**, daß der oder die Magneten (1; 1'; 1a, 1b) und die Polmassen (2, 3; 2', 3'; 2", 3") auf einem Kern (14) aus nichtmagnetischem Material angeordnet sind.

10. Detektor nach einem der Ansprüche 1 bis 9,
**dadurch gekennzeichnet**, daß die gegenüberliegenden Flächen der konvergierenden Umfangsflächen (5, 6; 5', 6'), die den Luftspalt begrenzen, durch parallele Ebenen begrenzt sind.

11. Detektor nach einem der Ansprüche 1 bis 9,
**dadurch gekennzeichnet**, daß die gegenüberliegenden Flächen der konvergierenden Umfangsflächen (5, 6; 5', 6'), die den Luftspalt begrenzen, durch nicht ebene Flächen oder nicht parallele Ebenen begrenzt sind.

12. Detektor nach einem der Ansprüche 1 bis 11,
**dadurch gekennzeichnet**, daß eine der konvergierenden Umfangsflächen (5, 6; 5', 6') durch ein Teil (2, 3; 9, 10; 9', 10') getragen ist, das in seiner axialen Lage einstellbar ist.

13. Detektor nach Anspruch 1,
**dadurch gekennzeichnet**, daß der Luftspalt (4, 4') von einem Ring aus einem nichtmagnetischen Material umgeben ist.

## Claims

1. Electrical magnetic detector of the type intended to be disposed in the passage of a flow of fluid to capture the metallic particles transported in said flow and to trigger an alarm after capture of a predetermined quantity of metallic particles, of the type comprising a magnet, two polar masses being disposed on both sides of said magnet and separated by an axial air gap,
characterized in that the external surface of said detector has, at least in the vicinity of the air gap (4, 4'), a peripheral surface (5, 6 ; 5', 6') converging toward said air gap.

2. Detector according to claim 1,
characterized in that the polar masses (2, 3) are of a weakly magnetic material and comprise said external converging surfaces (5, 6) of the detector.

3. Detector according to claim 1,
characterized in that the polar masses (2', 3') are of a magnetic material and are each claded in a spacer (9, 10) of weakly magnetic material comprising respectively said external converging surface (5', 6') of the detector.

4. Detector according to claim 1,
characterized in that the detector comprises two magnets (1a, 1b) mounted in opposition and separated by a magnetic mass (11), the opposite ends of each of the magnets (1a, 1b) being provided with a polar mass (2", 3") of magnetic material, a spacer (9', 10') of weakly magnetic material comprising said external surface surrounding each of said magnets (1a, 1b) and the associated polar mass (2", 3").

5. Detector according to claim 4,
characterized in that the thickness of the magnetic mass (11) separating the two magnets (1a, 1b) is twice that of the polar masses (2", 3") which are of the same thickness.

6. Detector according to one of claims 1 to 5,
characterized in that the magnet or magnets (1 ; 1' ; 1a, 1b) are samarium-cobalt magnets.

7. Detector according to one of claims 1 to 6,
characterized in that it is protected by an envelope (15) of synthetic material.

8. Detector according to one of claims 1 to 7,
characterized in that it is connected to the terminals (21, 22) of an electrical detection circuit (23) supplying an alarm and/or display and/or signaling device.

9. Detector according to one of claims 1 to 8,
characterized in that the magnet or magnets (1 ; 1' ; 1a, 1b) and the polar masses (2, 3 ; 2', 3'; 2", 3") are mounted on a core (14) of amagnetic material.

10. Detector according to one of claims 1 to 9,
characterized in that the facing surfaces of said converging peripheral surfaces (5, 6 ; 5', 6') wich delimit the air gap, are delimited by parallel planes.

11. Detector according to one of claims 1 to 9,
characterized in that the facing surfaces of said converging peripheral surfaces (5, 6 ; 5', 6') which delimit the air gap, are delimited by non-planar surfaces or non-parallel planes.

12. Detector according to one of claims 1 to 11,
characterized in that one of the converging peripheral surfaces (5, 6 ; 5', 6') is carried by a member (2, 3 ; 9, 10; 9', 10') adjustable as to its axial position.

13. Detector according to claim 1,
characterized in that the air gap (4, 4') is surrounded by a ring of amagnetic material.
